# EUROPÄISCHE PATENTSCHRIFT

(11) **EP 1 378 372 B1**
(45) Veröffentlichungstag und Bekanntmachung des Hinweises auf die Patenterteilung: **04.05.2011**
(21) Anmeldenummer: 03012212.1
(22) Anmeldetag: 06.06.2003
(51) Int. Cl.: B42C 5/04, B23C 5/06

(54) **Vorrichtung zum rotativen Bearbeiten von Materialien**
Device for rotational working of materials
Dispositiv pour le traitement rotatif des matériels

(30) Priorität: 04.07.2002 DE 10230051
(43) Veröffentlichungstag der Anmeldung: 07.01.2004
(73) Patentinhaber: Heidelberger Druckmaschinen Aktiengesellschaft, 69115 Heidelberg (DE)
(72) Erfinder: Dera, Thomas, 73312 Geislingen (Steige) (DE); Domes, Helmut, Dr., 70372 Stuttgart (DE); Freund, Michael, 73099 Adelberg (DE); Grüneberg, Frank, 73329 Kuchen (DE); Schweizer, Andreas, 73342 Bad Ditzenbach Gosbach (DE)
(74) Vertreter: Franzen, Peter

(56) Entgegenhaltungen:
- CH-A- 676 344
- DE-A- 1 929 901
- DE-A- 2 719 402
- DE-A- 10 022 836
- US-A- 3 758 928

## Beschreibung

Die Erfindung betrifft eine Vorrichtung zum Bearbeiten von Seitenkanten von in Stapeln angeordneten blattförmigen Bedruckstoffen, gemäß des Oberbegriffs des Anspruchs 1, zur Vorbereitung einer Klebebindung. Für Bücher oder Broschüren in kleinen Auflagen wird häufig zum Verbindung der einzelnen Blätter eine Klebebindung verwendet. Besonders werden Klebebindung für die Weiterverarbeitung von Digitaldrucken und Kopien eingesetzt, da hierbei besonders niedrige Auflagen, z.B. von nur einem Exemplar hergestellt werden.

Zur Herstellung einer Klebebindung werden die blattförmigen Bedruckstoffe, die am Ende das fertig gebundene Buch oder die Broschüre ausmachen, zunächst gesammelt und in einem Stapel zueinander ausgerichtet. Dieser Stapel blattförmiger Bedruckstoffe wird derart geklemmt, so dass ein Verrutschen der einzelnen blattförmigen Bedruckstoffe im Stapel möglichst ausgeschlossen ist. Im Anschluss wird eine Seite des Stapels blattförmiger Bedruckstoffe zunächst plangefräst und dann mit einem geeigneten Klebemittel bestrichen. Als Klebemittel kommen verschiedene Heißleime oder Kaltleime, sogenannte Dispersionsleime in Frage. Die Art des Klebemittels ist für die vorliegende Erfindung allerdings unerheblich. Werden die Seitenkanten der blattförmigen Bedruckstoffe lediglich abgefräst bevor das Klebemittel aufgetragen wird, so hat das Klebemittel in der Regel nur eine geringe Kontaktfläche mit dem blattförmigen Bedruckstoff, der fixiert werden soll, da das Klebemittel sich nur mit einer geraden Seitenkante der einzelnen blattförmigen Bedruckstoffe verbinden kann. Dies führt zu einer niedrigen Ausreißfestigkeit der blattförmigen Bedruckstoffe im fertig gebundenen Produkt.

Die Qualität der Klebebindung kann verbessert werden, indem die Oberfläche der Seitenkante und damit die Kontaktfläche zwischen Klebemittel und blattförmigem Bedruckstoff vergrößert wird.

Eine weitere Verbesserung der Klebebindung kann dadurch erzielt werden, indem die Benetzung der Seitenkante des blattförmigen Bedruckstoffs durch Klebstoff verbessert wird. Dies kann zum Beispiel dadurch erfolgen, indem die Papierfasern der Seitenkante des blattförmigen Bedruckstoffs freigelegt wird, die letztlich für die mechanische Verankerung des blattförmigen Bedruckstoffs in dem Klebemittel sorgen. Insbesondere bei gestrichenen Papieren ist dies eine wichtige Anforderung, da auch bei diesen nur der Faseranteil zur Festigkeit beiträgt, der Strichanteil aber hier bis zur Hälfte des Materials ausmachen kann. Daher wird in vielen Vorrichtungen zur Bearbeitung von Seitenkanten von blattförmigen Bedruckstoffen in Vorbereitung einer Klebebindung ein zusätzliches Kerbwerkzeug oder anderes Aufrauwerkzeug verwendet, um die Papierfaser freizulegen und die Verankerung zwischen Papier und Klebemittel zu verbessern. Neben der Aufrauung der Seitenkanten der blattförmigen Bedruckstoffe im Stapel ist es aber zusätzlich notwendig, die zu verklebende Fläche zunächst zu egalisieren, was typischerweise mit einem Fräswerkzeug in einem ersten Schritt erreicht wird. Zwingend ist der Schritt des Abfräsens der zu verklebenden Seite des Stapels bei der Klebebindung von Signaturen, da hier zunächst die Rückenfalze abzuschneiden sind.

Eine derartige Vorrichtung wird beispielsweise in der schweizerischen Patentschrift CH 30 36 78 offenbart. In einem ersten außen liegenden Ring sind Schneidwerkzeuge zur Egalisierung eines Buchrückens angebracht, in einem inneren Ring sind Kerbwerkzeuge zur Aufrauung des Buchrückens vorgesehen. Ein vorbeigeführter Buchblock wird dadurch zunächst von den Schneidwerkzeugen egalisiert und im Anschluss von den Kerbwerkzeugen mit bogenförmigen, sich gegenseitig kreuzenden Kerben auf dem Rücken versehen.

Eine weitere gattungsgemäße Vorrichtung wird in der deutschen Patentschrift DE 19 29 901 C3 offenbart. In dieser Vorrichtung rotiert eine Messerscheibe auf einer Antriebswelle, wobei die Messerscheibe Schneidzähne entlang ihres Umfangs trägt, um die Rückenkante eines Papierstapels zu beschneiden, der darüber hinweggeführt wird. Ferner sind auf der Messerscheibe ein oder mehrere nach oben gerichtete Schneidzähne derart angebracht, dass sie vertikal positioniert werden können. Dadurch lässt sich die Schneidtiefe der nach oben gerichteten Schneidzähne verändern.

Eine weitere gattungsgemäße Vorrichtung, die das Egalisieren oder Aufrauen eines Buchoder Broschürenblocks vor dem Auftragen von Klebstoff in einem Werkzeugkopf kombiniert, wird in der deutschen Offenlegungsschrift DE 100 22 836 A1 offenbart. In dieser Vorrichtung ist ein rotationsangetriebener Werkzeugkopf mit am Umfang verteilten äußeren Werkzeugen zum Bearbeiten des Blockrückens, wie Fräsen oder Beschneiden, und mit innerhalb der äußeren Werkzeuge angeordneten Werkzeuge zum Nachbearbeiten des Blockrückens, wie Kerben und Aufrauen, versehen. Die Vorrichtung sieht eine stufenweise Höhenverstellung zwischen den ersten Werkzeugen und den zweiten Werkzeugen vor, um die Schneidtiefe der zweiten Werkzeuge zu verändern. In einer besonderen Ausführungsform sind zudem Bürsten auf dem Werkzeugkopf vorgesehen, die den bei der Bearbeitung des Buchblockrückens entstehenden Staub sowie anfallende lose Papierpartikel beseitigen.

Eine weitere Vorrichtung zum Einbringen von Kerben in die Seitenkanten von blattförmigen Bedruckstoffen in einem Stapel zur Vorbereitung einer Klebebindung wird in der britischen Patentanmeldung GB 20 96 945 A offenbart. In dieser Vorrichtung sind Kerbmesser auf einer rotierenden Scheibe angebracht, über welche ein Stapel blattförmiger Bedruckstoffe geführt wird. Die Rotationsachse des Werkzeugkopfs ist leicht bezüglich der Senkrechten, zur Bewegungsrichtung des Stapels blattförmiger Bedruckstoffe, geneigt, so dass die Kerbzähne nur auf einer Seite des Werkzeugkopfes in Kontakt mit dem Stapel blattförmiger Bedruckstoffe treten.

Eine weitere Vorrichtung zum Aufrauen eines aus zusammengepressten einzelnen Druckbogen gebildeten Buchblockrückens wird in der europäischen Patentschrift EP 799 718 B1 offenbart. Hier weist die Bearbeitungsebene des Aufrauwerkzeuges einen flachen Anstellwinkel α bezüglich des Buchblockrückens auf, derart, dass das Aufrauwerkzeug beim Durchlauf durch die in Fortbewegungsrichtung nachlaufenden Abschnitte Markierungen bilden, deren Bearbeitungstiefe von denen in der Fortbewegungsrichtung vorauslaufenden Abschnitten gebildeten Markierungen verschieden ist.

Wie aus dem angeführten Stand der Technik zu erkennen ist, besteht Bedarf an Vorrichtungen zur Bearbeitung von Seitenkanten von Materialien, insbesondere zur Vorbereitung einer Klebebindung und insbesondere an Vorrichtungen, die das Egalisieren und Aufrauen der Seitenkanten in einem einzigen Werkzeugkopf vereinen. Es ist daher die Aufgabe der vorliegenden Erfindung, eine verbesserte Vorrichtung zur Bearbeitung von Materialien zu schaffen.

Diese Aufgabe wird mit Hilfe der erfindungsgemäßen Vorrichtung mit den in Anspruch 1 genannten Merkmalen gelöst. Weitere Merkmale ergeben sich aus den Zeichnungen und den Unteransprüchen.

Demgemäss betrifft die erfindungsgemäße Vorrichtung eine Vorrichtung zum Bearbeiten der Seitenkanten von entlang einer Bewegungsrichtung bewegten in einem Stapel angeordneten blattförmigen Bedruckstoffen in einer Schnittebene, mit einem um eine Drehachse rotationsangetriebenen Werkzeugkopf der einen Schneidring trägt, wobei an dem Umfang des Schneidrings eine Mehrzahl von Bearbeitungselementen angeordnet ist, wobei die Bearbeitungselemente mindestens ein Schneidsegment zum Beschneiden des Materials aufweisen, wobei das Schneidsegment mindestens eine dem Material zugewandte Schneidecke aufweist, die die Schnittebene definiert, wobei mindestens eines der Bearbeitungselemente in Achsrichtung dem Material zugewandt mindestens ein Kerbsegment zum Aufrauen der Seitenkanten von in einem Stapel angeordneten blattförmigen Bedruckstoffen aufweist, das in der Schnittebene über die Schneidecke ragt.

Durch die Anordnung von Kerbelementen und Schneidelementen auf dem Bearbeitungselement kann sehr günstig auf die Aufrautiefe der Kerbelemente Einfluss genommen werden. Die Aufrautiefe, die das Eindringen der Kerbelemente über der Schnittebene angibt, ist ein wesentlicher Faktor, der in die Eigenschaften einer fertigen Klebebindung eingeht. Hierbei führt eine geringe Aufrautiefe dazu, dass das auf die bearbeiteten Seitenkanten der in dem Stapel angeordneten blattförmigen Bedruckstoffe aufgetragene Klebemittel nur gering seitlich in den Stapel blattförmiger Bedruckstoffe eindringen kann. Eine geringe Eindringtiefe des Klebemittels ist typischerweise mit einer geringen Ausreißfestigkeit der blattförmigen Bedruckstoffe aus dem Stapel, aber einem vorteilhaften Aufschlagverhalten des gebundenen Stapels blattförmiger Bedruckstoffe verbunden. Eine große Aufrautiefe und damit ein erhöhtes Eindringen des Klebemittels in die Seite des Stapels blattförmiger Bedruckstoffe führt dagegen umgekehrt typischerweise zu einer hohen Ausreißfestigkeit der blattförmigen Bedruckstoffe aus dem Stapel, aber einem schlechten Aufschlagverhalten des gebundenen Stapels. Um sowohl ein gutes Aufschlagverhalten des gebundenen Stapels blattförmiger Bedruckstoffe und eine hohe Ausreißfestigkeit zu erreichen, ist es daher erforderlich, die Aufrautiefe möglichst optimal einzustellen. Diese optimale Aufrautiefe kann unterschiedlich sein für verschiedene Arten von blattförmigen Bedruckstoffen, je nach Qualität der blattförmigen Bedruckstoffe, Papiergewicht, Material usw. Durch die Anordnung von Kerbsegmente und Schneidsegmente auf dem selben Bearbeitungselement kann diese vorgegebene Aufrautiefe mit einer Genauigkeit im hundertstel Millimeterbereich einfach und einmalig erzielt werden. Eine Justage zweier einzelner Bearbeitungsstationen zueinander oder von einzelnen Kerbelementen und Schneidelementen, die beispielsweise auf unterschiedlichen Ringen angeordnet sind, ist in dieser Genauigkeit technisch, wenn überhaupt, nur mit extrem hohem Aufwand zu erreichen.

Ein weiterer Vorteil ergibt sich bei der Anordnung von Kerbsegmenten und Schneidsegmenten auf dem selben Bearbeitungselement durch den geringen erforderlichen Bauraum, wodurch kompakte Klebebinder mit vorteilhaften Leistungsdaten realisiert werden können.

Ein weiterer Vorteil der Anordnung der Kerbsegmente und Schneidsegmente auf dem selben Bearbeitungselement ergibt sich durch den großen Radius, den die Kerbsegmente haben, im Vergleich zu einer Vorrichtung, bei der die Schneidelemente in einem äußeren Ring und die Kerbelemente in einem inneren Ring auf dem Werkzeugkopf angeordnet sind. Durch diesen größeren Radius wird zusätzlich auch die Geschwindigkeit, mit der die Kerbsegmente in die abgefräste Seite des Stapels blattförmiger Bedruckstoffe durch den größeren Radius vergrößert. Durch die größere Geschwindigkeit beim rückseitigen Wiedereinlauf der Kerbsegmente kann eine verbesserte Reinigung der Materialoberfläche von Staub oder andern Verunreingungen erzielt werden. Außerdem wird durch eine Vergößerung einen größeren Radius der Schneidwinkel der Kerbsegmente verbessert, da mit steigendem Radius das Kerbsegment mit zunehmendem Eintrittswinkel auf die Materialseite auftritt, im Idealfall unter einem rechten Eintrittswinkel. Dadurch kann vermieden werden, dass die Kerbsegmente durch das Material reißen, sonderen vielmehr dieses durchschneiden.

In einer vorteilhaften Ausgestaltung der erfindungsgemäßen Vorrichtung weist jedes Bearbeitungselement genau ein Kerbsegment auf, alternativ kann ein Bearbeitungselement auch eine Mehrzahl an Kerbsegmenten aufweisen, insbesondere radial entlang der oberen Seite des Bearbeitungselements verteilt. Eine weitere alternative Ausführungsform kann es vorsehen, dass die Kerbsegmente der einzelnen Bearbeitungselemente einen radialen Versatz zueinander aufweisen. Dadurch können alternative Kerbmuster in der abgefrästen Seite des Materials erzeugt werden.

In einer weiteren vorteilhaften Ausgestaltung der erfindungsgemäßen Vorrichtung wird das Kerbsegment aus dem Bearbeitungselement ausgeschliffen. Diese Technik stellt sicherlich die einfachste Möglichkeit dar, die Kerbsegmente auf dem Bearbeitungselement zu erzeugen. Alternativ könnten auch spezielle Einsätze hergestellt werden, die an den Bearbeitungselementen, die bereits ein Schneidsegment aufweisen, befestigt werden. Durch das Abschleifen der Bearbeitungselemente, die typischerweise nur als Schneidelemente eingesetzt werden sollen, ist es möglich, die gewünschte Geometrie aller einzelnen Bearbeitungselemente auf dem Schneidring mit sehr geringen Toleranzen behaftet identisch zu erzeugen. Bearbeitungselemente, die lediglich zum Schneiden oder Abfräsen dienen, sind aus dem Stand der Technik hinreichend bekannt.

Bei dem Material der Bearbeitungselemente handelt es sich vorteilhafterweise um gesintertes Hartmetall. Alternativ können auch Bearbeitungselemente aus Stahl, der nachträglich durch Ionenimplantation gehärtet wird, zum Einsatz kommen. Das hat den Vorteil, dass sich der Stahl zunächst leichter schleifen lässt, was zu geringeren Abnutzungen am Schleifwerkzeug führt, womit die Herstellungskosten niedriger werden. Als Schleifwerkzeug kommen typischerweise Diamantschleifer zum Einsatz. Außerdem wird durch die nachträgliche Ionenimplantation die Oberfläche der endgültigen Bearbeitungsgeometrie gehärtet.

In einer weiteren vorteilhaften Ausgestaltung der erfindungsgemäßen Vorrichtung sind die Bearbeitungselemente an dem Schneidring angelötet. Dadurch kann die Endmontage des Werkzeugkopfs erleichtert werden und die Gesamtheit der Schneidelemente auf leichte Art und Weise ausgewechselt werden. Eine komplizierte Justage der einzelnen Bearbeitungselemente zueinander auf dem Schneidring entfällt, sobald die Bearbeitungselemente angelötet wurden. Alternative, nichtlösbare Verbindungsmethoden zur Verbindung zweier Metallteile können erfindungsgemäß ebenfalls zum Einsatz kommen.

In einer weiteren vorteilhaften Ausgestaltung der erfindungsgemäßen Vorrichtung werden bei der Herstellung der Bearbeitungselemente zunächst die Bearbeitungselemente an den Schneidring angelötet und dann die Schneidesegmente und Kerbsegmente aus den Bearbeitungselementen ausgeschliffen. Dadurch wird zwar das Auswechseln einzelner Bearbeitungselemente am Schneidring erschwert, dagegen ist aber keine weitere Justage der einzelnen Schneidelemente erforderlich. Insbesondere fallen auf diese Weise alle Montagetoleranzen der Schneidelemente untereinander weg. Der Vorteil, das die Bearbeitungsgeometrie der einzelnen Bearbeitungselemente untereinander auf diese Weise bis im Bereich von hundertstel Millimetern gleich ist, überwiegt.

In einer besonders vorteilhaften Ausgestaltung der erfindungsgemäßen Vorrichtung wird das Kerbsegment bei Abnützung nachgeschliffen wobei das Schneidniveau des Schneidsegments abgeschliffen wird. Insbesondere wird die Höhe der Schneidecke abgesenkt, so dass der ursprüngliche Höhenunterschied zwischen der obersten Ecke des Schneidsegments und der obersten Ecke des Kerbsegments wieder erreicht wird. Da dieser Nachschliff wieder bei allen Bearbeitungselementen gleichzeitig durchgeführt werden kann und diese Bearbeitungselemente dabei nicht ihre räumliche Relation zueinander einbüßen, kann auch nach einem Nachschliff eine perfekte Abstimmung zwischen Schneidsegmenten und Kerbsegmenten aller Bearbeitungselemente des Werkzeugkopfes erzielt werden. Wird als Material für die Bearbeitungselemente Stahl gewählt, der nach dem Schliff der Kerbsegmente mittels Ionenimplantation gehärtet wurde, kann darüber hinaus vorteilhafterweise nach dem Abschliff der Bearbeitungselemente zur Erneuerung der Bearbeitungsgeometrie eine weitere Härtung mittels Ionenimplantation vorgenommen werden.

Nach dem Nachschliff kann der Schneidring unterlegt werden, um die alte Schnittebene wieder zu erreichen, ohne das an dem Rest der erfindungsgemäßen Vorrichtung Änderungen vorgenommen werden müssten. Die Unterlegscheibe kann speziell an das abgetragene Schneidniveau der Bearbeitungselemente angepasst werden. Alternativ werden vorgefertigte Unterlegscheiben mit vorgegebener Dicke verwendet, dementsprechend reduziert der Nachschliff die Bearbeitungselemente um die vorgegebene Dicke der vorgefertigten Unterlegscheiben.

In einer weiteren vorteilhaften Ausgestaltung der erfindungsgemäßen Vorrichtung ist die Drehachse des Werkzeugkopfes relativ zur bearbeitenden Seitenkante des Materials derart verkippt, so dass die Drehachse einen spitzen Winkel α zur Senkrechten auf der Bewegungsrichtung bildet. Dadurch gelangen die Schneidsegmente nur auf einer Seite in Kontakt mit den Seitenkanten der blattförmigen Bedruckstoffe. Damit können die bei der Bearbeitung auftretenden Schnittkräfte reduziert werden, was zu einer höheren Leistung des Schneidwerkzeugs führt. Durch die Reduzierung der Schnittkräfte kann ein Auffächern des Stapels blattförmiger Bedruckstoffe während der Bearbeitung verhindert werden. Ein weiterer Vorteil ergibt sich aus der Neigung der Drehachse, womit unvermeidbare Fertigungs- und Montagetoleranzen, die zu einer Taumelbewegung des Werkzeugkopfes führen, die durch ausreichend große Wahl des Winkel α kompensiert werden kann.

In einer vorteilhaften Weiterbildung der erfindungsgemäßen Vorrichtung ist der Winkel α derartig eingestellt, dass die Kerbsegmente zweimal in die Schnittebene des Materials eintauchen, die Schneidsegmente dagegen nur einmal. Einerseits lässt es sich dadurch erreichen, dass die Kerbsegmente in zwei unterschiedlichen Aufrautiefen die Seitenkanten des Materials einkerben. Dadurch, dass die Kerbsegmente beim zweiten Eintauchen in geringerer Aufrautiefe die Seite des Materials einkerben, kommt es dort zu geringeren Schnittkräften.

In dem Fall, dass es sich bei dem zu bearbeitenden Material um einen Stapel blattförmigen Bedruckstoffen handelt, so führen die geringeren Schnittkräfte zu einer vorteilhaften Entstaubung der Schnittebene, wenn in diesem Bereich der Stapel blattförmiger Bedruckstoffe leicht aufgefächert wird. Eine gründliche Entstaubung der bearbeiteten Seitenkante der blattförmigen Bedruckstoffe ist wichtig, da die Papier- und Staubpartikel, die sich sonst auf der bearbeitenden Oberfläche befinden, das Benetzen der Seitenkanten durch Klebemittel beeinträchtigen.

In einer vorteilhaften Weiterbildung der erfindungsgemäßen Vorrichtung ist der Winkel a verstellbar, insbesondere kann der Winkel α an die Materialbeschaffenheit des Materials angepasst werden. Dies ist insbesondere dann von Vorteil, um die Bearbeitung des Materials an die Eigenschaften des Materials anzupassen, z. B., wenn es sich bei dem Material um einen Stapel blattförmiger Bedruckstoffe handelt, an die Anzahl der blattförmigen Bedruckstoffe im Stapel, Art der blattförmigen Bedruckstoffe, ob und wie die blattförmigen Bedruckstoffe bedruckt sind, insbesondere im Bereich der zu bearbeitenden Seitenkante usw.. Die stufenlose Verstellbarkeit der Kerbtiefe kann beispielsweise durch eine stufenlose Verstellbarkeit des Winkels α erreicht werden. Alternativ ist auch eine stufenartige Verstellbarkeit des Winkels α denkbar.

In einer weiteren vorteilhaften Ausgestaltung der erfindungsgemäßen Vorrichtung ist auf dem Werkzeugkopf eine Reinigungsbürste integriert. Die Reinigungsbürste ist auf der Oberfläche des Werkzeugkopfs im Bereich, der innerhalb der Anordnung der Schneidelemente liegt, angebracht und dient zu einer Verbesserung der Entstaubung der bearbeiteten Fläche des Stapels blattförmiger Bedruckstoffe.

In einer weiteren vorteilhaften Ausgestaltung der erfindungsgemäßen Vorrichtung wird durch die Rotation des Werkzeugkopfs gezielt ein Unterdruck im Bereich des Werkzeugkopfes erzeugt, der die bei der Bearbeitung entstehenden Materialpartikel absaugt. Dies kann beispielsweise dadurch erreicht werden, dass eine Lüfterspirale im Zentrum der Frässcheibe vorgesehen ist, die vergleichbar mit dem Wirkprinzip eines Haartrockners durch die Rotation der Frässcheibe ein Luftstrom von der bearbeiteten Fläche des Stapels blattförmiger Bedruckstoffe weg erzeugt. Dadurch kann eine vorteilhafte Absaugung direkt am Entstehungsort der Materialpartikel erreicht werden. Im Fall, dass es sich bei dem Material um einen Stapel blattförmiger Bedruckstoffe handelt, fördert dies wiederum die Entstaubung und damit durch die Verbesserung der Benetzung der Seitenränder der blattförmigen Bedruckstoffe durch das Klebemittel die Qualität der Klebebindung verbessert.

In einer weiteren vorteilhaften Ausgestaltung der erfindungsgemäßen Vorrichtung weist mindestens eines der Bearbeitungselemente ebenfalls auf der dem Material abgewandten Seite des Schneidrings mindestens ein Kerbelement auf. Dies ist insbesondere dann von Vorteil, wenn sich durch den Einbau des gewendeten Schneidrings in den Werkzeugkopf eine zweite bevorzugte Kerbtiefe erreichen lässt. Auf diese Weise kann eine Anpassung der Aufrautiefe zwischen zwei bevorzugten Aufrautiefen auf einfache Art und Weise erreicht werden.

Bevorzugte Ausführungsformen der erfindungsgemäßen Vorrichtung werden im folgenden unter Bezugnahme auf die Zeichnung im einzelnen näher beschrieben. Es zeigen in schematischer Darstellung:
- Fig. 1: eine schematische Darstellung der erfindungsgemäßen Vorrichtung;
- Fig. 2: eine schematische Darstellung der erfindungsgemäßen Vorrichtung mit verkippter Drehachse;
- Fig. 3: eine schematische isometrische Darstellung der erfindungsgemäßen Bearbeitungselemente und Schneidplatte;
- Fig. 4: eine schematische Draufsicht der erfindungsgemäßen Bearbeitungselemente und Schneidplatte;
- Fig. 5: eine schematische Vergrößerung der erfindungsgemäßen Bearbeitungselemente in isometrischer Darstellung;
- Fig. 6: eine schematische Vergrößerung der erfindungsgemäßen Bearbeitungselementen in Seitenansicht.

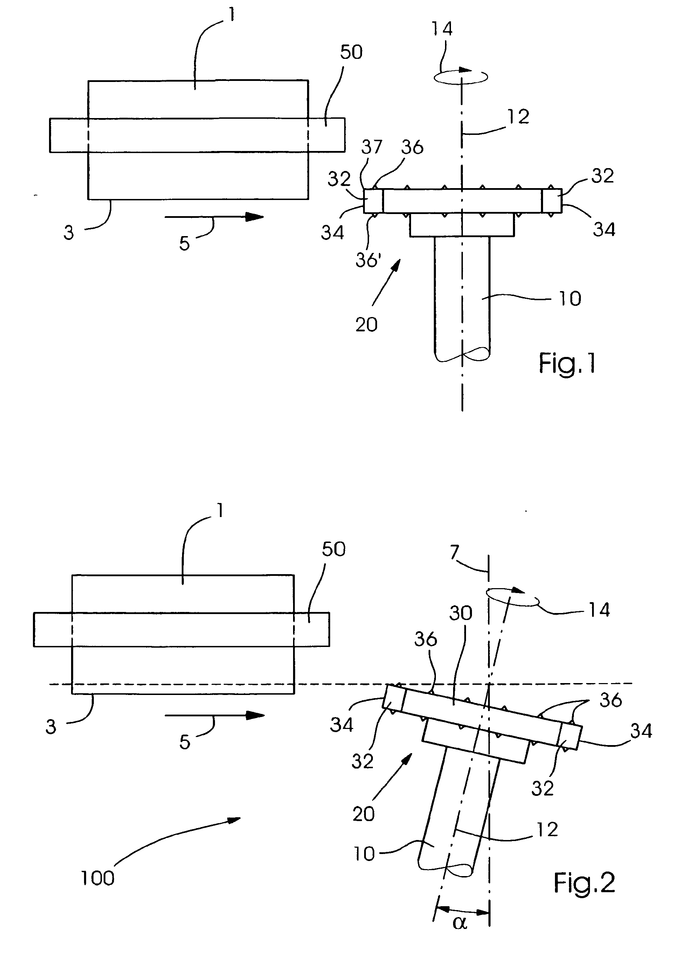

In Figur 1 ist das grundlegende Funktionsprinzip der erfindungsgemäßen Vorrichtung 100 bei der Bearbeitung von einem Material 1 gezeigt. Bei dem Material 1 handelt es in den gezeigten Ausführungsformen um einen Stapel blattförmiger Bedruckstoffe 1.

Ein Stapel blattförmiger Bedruckstoffe 1 mit einer gemeinsamen Seitenkante 3 wird entlang einer mit dem Bezugszeichen 5 gekennzeichneten Bewegungsrichtung auf einen Werkzeugkopf 20 zutransportiert. Dafür wird der Stapel blattförmiger Bedruckstoffe 1 durch eine Zange 50 am Auffächern gehindert. Die Zange 50 trägt weiterhin dazu bei, dass durch die auftretenden Scherkräfte kein Verrutschen der blattförmigen Bedruckstoffe 1 im Stapel entsteht. Der Werkzeugkopf 20 mit Bearbeitungselementen 32 befindet sich in Bewegungsrichtung der blattförmigen Bedruckstoffe 1. Der Werkzeugkopf 20 rotiert um eine Drehachse 12, wobei die Drehachse 12 einen Winkel α zur Senkrechten 7 auf der Schnittebene 9 bildet, wie in Fig. 2 dargestellt. In Fig. 1 liegen Drehachse 12 und Senkrechte 7 übereinander. Die Bearbeitungselemente 32 kommen in der Schnittebene 9 mit den Seitenkante 3 der blattförmigen Bedruckstoffe 1 in Kontakt und fräsen dabei die blattförmigen Bedruckstoffe 1 bis zur Schnittebene 9 ab. Die oberen Ecken 39 der Kerbelemente 36 sind derart auf dem Werkzeugkopf 20 angeordnet, so dass zumindest die vorauseilenden Ecken 39 der Kerbelemente 36 über die Schnittebene 9 ragen, und dadurch die bearbeitende Seite des Stapels blattförmiger Bedruckstoffe 1 in einem gewünschten Maß aufraut.

Wird der Werkzeugkopf 20 wie in Fig. 2 dargestellt unter einem Winkel α zur Senkrechten 7 auf der Schnittebene 9 angestellt, so kommt nur die oberste Ecke 37 des Schneidsegments 34 des jeweilig vorrauseilenden Bearbeitungselements 32 in Kontakt mit dem Stapel blattförmiger Bedruckstoffe 1. Die Kerbsegmente 36 weisen auch hier eine Geometrie auf, so dass die oberste Ecke 39 des Kerbsegments 36 über die Schnittebene 9 ragt, so dass es zu einem Aufrauen des blattförmigen Bedruckstoffe 1 kommt. Aus geometrischen Betrachtungen ist klar, dass sich bei vorgegebener Bearbeitungsgeometrie durch eine Winkeländerung eine Variation in der Aufrautiefe erzielen lässt.

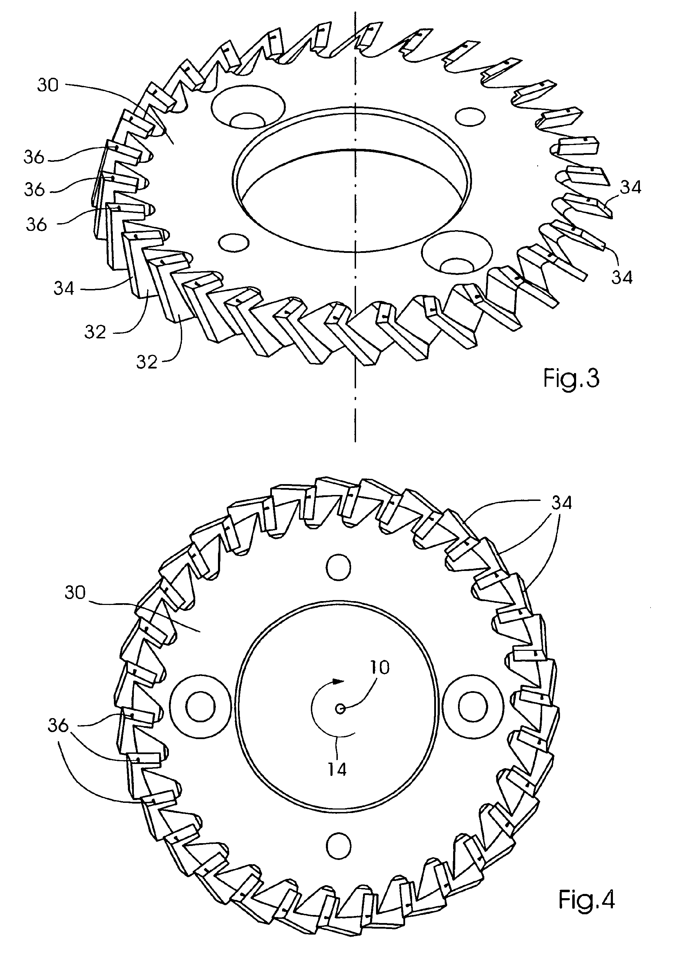

Der Werkzeugkopf 20 rotiert beim Bearbeiten eines Stapels blattförmiger Bedruckstoffe 1 um die mit dem Bezugszeichen 12 in den Figuren gekennzeichnete Drehachse in einer Richtung, die in den Figuren mit dem Bezugszeichen 14 gekennzeichneten Pfeils angegeben ist. Wie insbesondere in Fig.3 zu erkennen ist, weist der Schneidring 30 am Umfang eine Anzahl von Bearbeitungselementen 32 auf. Die Bearbeitungselemente 32 sind in der Drehrichtung 14 nach vorne geneigt an dem Schneidring 30 befestigt. Die Bearbeitungselemente 32 weisen Schneidsegmente 34 auf, die den Schnitt durch die blattförmigen Bedruckstoffe 1 verursachen. Die Schneidsegmente 34 sind dabei die in Bewegungsrichtung 14 vorauseilenden Außenkanten der Bearbeitungselemente 32. Der Schnitt durch die blattförmigen Bedruckstoffel findet im Wesentlichen an der Schneidecke 37 statt, die das obere Ende der Schneidsegmente 34 darstellt. Das Schneidsegment 34 weist einen typischen Hinterschnitt auf. Die Bearbeitungselemente 32 können einerseits an den Schneidringen 30 lösbar befestigt angebracht sein, beispielsweise durch Anschrauben, andererseits können die Schneidelemente 32 auch an den Schneidringen 30 unlösbar befestigt sein, z. B. durch Anlöten.

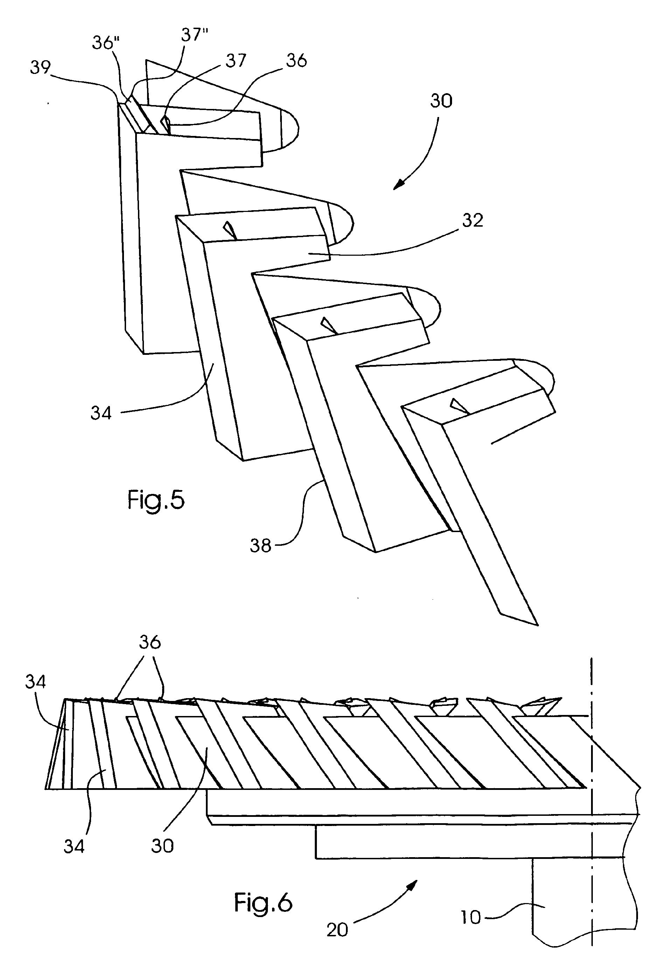

Darüber hinaus weisen die Bearbeitungselemente 32 auf der den blattförmigen Bedruckstoffen zugewandte Seite kleine Kerbsegmente 36 auf, vergleiche insbesondere Fig. 5 und Fig. 6. In einer ersten Ausführungsform sind die Kerbsegmente 36 keilartige Strukturen mit einer obersten Ecke 39, die die Aufrautiefe im Zusammenhang mit der obersten Ecke 37 der Scheidsegmente 34 bestimmt. Alternativ können in einer zweiten Ausführungsform prismaartige Kerbsegmente 36" mit obersten Ecken 39" vorgesehen sein. Letztere Ausführungsform 36", 39" hat den Vorteil, dass sich diese Geometrie einfacher aus dem Bearbeitungselement 32 herausschleifen lässt, und darüber hinaus eine höhere Festigkeit gegenüber der ersten Ausführungsform 36, 39 aufweist.

In Fig. 5 ist zur Verdeutlichung der Geometrie der zweiten Ausführungsform nur ein einziges Bearbeitungselement 32 mit einem Kerbsegment 36" gezeigt. Vorteilhafterweise weisen die Bearbeitungselemente 32 entweder die Kerbsegmente 36 der ersten Ausführungsform oder Kerbsegmente 36" der zweiten Ausführungsform auf.

Bei den Bearbeitungselemente 32 handelt es sich z. B. um diamantgeschliffene Hartmetallplättchen. Eine andere Ausführungsform sind geschliffene Stahlplättchen, die nachträglich gehärtet werden, z. B. durch Ionenimplantation. Letztere Methode hat den Vorteil, dass das Schleiferwerkzeug, zur Herstellung der Schneidsegmente 34 und insbesondere der Kerbsegmente 36 weniger verschleißt. Dadurch werden die Bearbeitungselemente 32 kostengünstiger in ihrer Fertigung.

Wie in Fig. 3 und Fig. 4 gezeigt, sind die Kerbsegmente 36 im Wesentlichen auf einem Kreis angeordnet. Dies ist aber nicht notwendigerweise so. In einer nicht gezeigten, alternativen Ausführungsform können die Kerbsegmente 36 in radialer Richtung versetzt sein, um alternative Kerbmuster in der abgefrästen Seite des Materials 1 zu erzielen. Ebenfalls ist es denkbar, zwei oder mehr Kerbringe 40 auf dem Werkzeugkopf 20 vorzusehen, die auch zum Beispiel nur eine geringer Anzahl an Kerbelementen 36 pro Bearbeitungselement 32 aufweisen.

Die Aufrautiefe der Kerbsegmente 36 bzw. der oberen Ecke 39 der Kerbsegmente 36 ergibt sich aus dem Höhenversatz zwischen der oberen Ecke 39 der Kerbsegmente 36 und der oberen Ecke 37 der Schneidsegmente 34.

Die erfindungsgemäße Vorrichtung 100 findet insbesondere Anwendung in Kleinklebebindern oder anderen Vorrichtungen zur Vorbereitung von Seitenkanten von blattförmigen Bedruckstoffen 1 vor einer Seitenkantenbeleimung, kann im Prinzip aber auch zur Bearbeitung anderer Oberflächen genutzt werden.

### Liste der Bezugszeichen

- 1: Material
- 3: Seitenkante des Materials
- 5: Bewegungsrichtung des Materials
- 7: Senkrechte auf die Schnittebene des Materials
- 9: Schnittebene
- 10: Welle
- 12: Rotationsachse
- 14: Drehrichtung des Werkzeugkopfes
- 20: Werkzeugkopf
- 30: Schneidring
- 32: Bearbeitungselement
- 34: Schneidsegment
- 36, 36' 36": Kerbsegment
- 37: obere Ecke des Schneidsegments
- 39, 39": obere Ecke des Kerbsegments
- 50: Zange
- α: Winkel zwischen Senkrechter auf Schnittebene und Rotationsachse

## Patentansprüche

1. Vorrichtung zum Bearbeiten der Seitenkanten von entlang einer Bewegungsrichtung (5) bewegten in einem Stapel angeordneten blattförmigen Bedruckstoffen (1) in einer Schnittebene (9), mit einem um eine Drehachse (10) rotationsangetriebenen Werkzeugkopf (20) der einen Schneidring (30) trägt, wobei an dem Umfang des Schneidrings (30) eine Mehrzahl von Bearbeitungselementen (32) angeordnet sind, wobei die Bearbeitungselemente (32) mindestens ein Schneidsegment (34) zum Beschneiden der Seitenkanten der in einem Stapel angeordneten blattförmigen Bedruckstoffe (1) aufweisen, wobei das Schneidsegment mindestens eine den in einem Stapel angeordneten blattförmigen Bedruckstoffen (1) zugewandte Schneidecke (37) aufweist, die die Schnittebene (9) definiert,
**dadurch gekennzeichnet,**
**dass** mindestens eines der Bearbeitungselemente (32) in Achsrichtung den in einem Stapel angeordneten blattförmigen Bedruckstoffen (1) zugewandt mindestens ein Kerbsegment (36, 36', 36") aufweist, um die Seitenkanten der in einem Stapel angeordneten blattförmigen Bedruckstoffe aufzurauen, wobei das mindestens eine Kerbsegment (36, 36', 36") in der Schnittebene über die Schneidecke (37) ragt.

2. Vorrichtung nach Anspruch 1,
**dadurch gekennzeichnet,**
**dass** das Kerbsegment (36, 36', 36") aus dem Bearbeitungselement (32) ausgeschliffen wird.

3. Vorrichtung nach Anspruch 1,
**dadurch gekennzeichnet,**
**dass** die Bearbeitungselemente (32) an dem Schneidring (30) angelötet sind.

4. Vorrichtung nach Anspruch 1,
**dadurch gekennzeichnet,**
**dass** bei der Herstellung der Bearbeitungselemente (32) zunächst die Bearbeitungselemente (32) an den Schneidring (30) angelötet werden und dann die Schneidesegmente (34) und Kerbsegmente (36, 36', 36") aus den Bearbeitungselementen (32) ausgeschliffen werden.

5. Vorrichtung nach Anspruch 1,
**dadurch gekennzeichnet,**
**dass** das Kerbsegment (36, 36', 36") bei Abnützung nachgeschliffen wird wobei das Schneidniveau des Schneidsegments (34) abgeschliffen wird.

6. Vorrichtung nach Anspruch 1,
**dadurch gekennzeichnet,**
**dass** die Drehachse (12) des Werkzeugkopfes (20) relativ zur bearbeitenden Seitenkante (3) der in einem Stapel angeordneten blattförmigen Bedruckstoffe (1) derart verkippt ist, so dass die Drehachse (12) einen spitzen Winkel (α) zur Senkrechten (7) auf der Bewegungsrichtung (5) bildet.

7. Vorrichtung nach Anspruch 6,
**dadurch gekennzeichnet,**
**dass** der Winkel (α) derartig eingestellt ist, dass die Kerbsegmente (36, 36', 36") zweimal in die Schnittebene (9) der in einem Stapel angeordneten blattförmigen Bedruckstoffe (1) eintauchen, die Schneidsegmente (34) dagegen nur einmal.

8. Vorrichtung nach Anspruch 6,
**dadurch gekennzeichnet,**
**dass** der Winkel (α) verstellbar ist, insbesondere an die Materialbeschaffenheit der in einem Stapel angeordneten blattförmigen Bedruckstoffe (1) angepasst werden kann.

9. Vorrichtung nach Anspruch 1,
**dadurch gekennzeichnet,**
**dass** durch die Rotation des Werkzeugkopfes (20) gezielt ein Unterdruck erzeugt wird, der die bei der Bearbeitung entstehenden Staub- und Papierpartikel absaugt.

10. Vorrichtung nach Anspruch 1,
**dadurch gekennzeichnet,**
**dass** mindestens eines der Bearbeitungselemente (32) ebenfalls auf der den in einem Stapel angeordneten blattförmigen Bedruckstoffe (1) abgewandten Seite des Schneidrings (30) mindestens ein Kerbelement (36') aufweist.

## Claims

1. Device for treating the side edges of sheet-shaped printing material (1) arranged in a stack and moved along a direction of movement (5) in a cutting plane (9) with a tool head (20) driven to rotate about an axis of rotation (10) and supporting a cutting ring (30) on the circumference of which a plurality of treatment elements (32) are provided which include at least one cutting segment (34) for trimming the side edges of the sheet-shaped printing material (1) arranged in a stack, the cutting segment including at least one cutting corner (37) facing the sheet-shaped printing material (1) in the stack and defining the cutting plane (9),
**characterized by**
the fact that facing the stacked sheet-shaped printing material (1) in the axial direction, at least one of the treatment elements (32) includes at least one notching segment (36, 36', 36") for roughening the side edges of the sheet-shaped printing material arranged in a stack, the at least one notching segment (36, 36', 36") extending beyond the cutting corner (37) in the cutting plane.

2. Device according to Claim 1,
**characterized by**
the fact that the notching segment (36, 36', 36") is ground out of the treatment element (32).

3. Device according to Claim 1,
**characterized by**
the fact that the treatment elements (32) are soldered to the cutting ring (30).

4. Device according to Claim 1,
**characterized by**
the fact that to produce the treatment elements (32), firstly, the treatment elements (32) are soldered to the cutting ring (30) and then the cutting segments (34) and the notching segments (36, 36', 36") are ground out of the treatment elements (32).

5. Device according to Claim 1,
**characterized by**
the fact that the notching segment (36, 36', 36") is re-ground in the case of wear, the cutting level of the cutting segment (34) being ground down in the process.

6. Device according to Claim 1,
**characterized by**
the fact that the axis of rotation (12) of the tool head (20) is tilted relative to the side edge (3) to be treated of the sheet-shaped printing material (1) arranged in a pile, i.e. tilted in such a way that the axis of rotation (12) forms an acute angle (α) with the vertical on the direction of movement (5).

7. Device according to Claim 6,
**characterized by**
the fact that the angle (α) is adjusted such that the notching segments (36, 36', 36") dip twice into the cutting plane (9) of the sheet-shaped printing material (1) arranged in a stack whereas the cutting segments (34) only dip once into the cutting plane (9).

8. Device according to Claim 6,
**characterized by**
the fact that the angle (α) is adjustable and may in particular be adapted to the material properties of the sheet-shaped printing material (1) arranged in a stack.

9. Device according to Claim 1,
**characterized by**
the fact that a negative pressure is created on purpose by the rotation of the tool head (20) to remove the dust and paper particles created by the treatment.

10. Device according to Claim 1,
**characterized by**
the fact that at least one of the processing elements (32) also includes at least one notching element (36') on that side of the cutting ring (30) that faces away from the sheet-shaped printing material (1) arranged in a stack.

## Revendications

1. Dispositif pour le traitement des bords latéraux de supports d'impression (1) en forme de feuille disposés dans une pile déplacée le long d'une direction de déplacement (5), dans un plan de coupe (9), avec une tête d'outil (20) entrainée en rotation autour d'un axe de rotation (10) qui porte une bague de coupe (30), une pluralité d'éléments de traitement (32) étant disposés sur la périphérie de la bague de coupe (30), les éléments de traitement (32) présentant au moins un segment de coupe (34) pour la coupe des bords latéraux des supports d'impression (1) en forme de feuille disposés dans une pile, le segment de coupe définissant au moins un angle de coupe (37) tourné vers les supports d'impression (1) en forme de feuille disposés en pile, angle qui définit le plan de coupe (9),
**caractérisé en ce qu'**au moins un des éléments de traitement (32) présente dans le sens axial le segment d'encoche (36, 36', 36") tourné vers les supports d'impression (1) en forme de feuille disposés dans une pile, pour rugosifier les bords latéraux des supports d'impression en forme de feuille disposés en pile, au moins le segment d'encoche (36, 36', 36") s'engageant dans le plan de coupe au delà de l'angle de coupe (37) .

2. Dispositif selon la revendication 1, **caractérisé en ce que** le segment d'encoche (36, 36', 36") est poncé sur l'élément de traitement (32).

3. Dispositif selon la revendication 1, **caractérisé en ce que** les éléments de traitement (32) sont brasés sur la bague de coupe (30).

4. Dispositif selon la revendication 1, **caractérisé en ce que** lors de la fabrication des éléments de traitement (32) dans un premier temps, les éléments de traitement (32) sont brasés sur la bague de coupe (30) et **en ce que** les segments de coupe (34) et les segments d'encoche (36, 36', 36") sont poncés des éléments de traitement (32).

5. Dispositif selon la revendication 1, **caractérisé en ce que** le segment d'encoche (36, 36', 36") est rectifié après usure, le niveau de coupe du segment de coupe (34) étant poncé.

6. Dispositif selon la revendication 1, **caractérisé en ce que** l'axe de rotation (12) de la tête d'outil (20) est basculé par rapport au bord latéral (3) à usiner des supports d'impression (1) en forme de feuille disposés dans une pile de sorte que l'axe de rotation (12) forme un angle aigu (α) par rapport aux perpendiculaires (7) sur la direction de mouvement (5).

7. Dispositif selon la revendication 6, **caractérisé en ce que** l'angle (α) est réglé de sorte que les segments d'encoche (36, 36', 36") pénètrent deux fois dans le plan de coupe (9) des supports d'impression (1) en forme de feuille disposés en forme de pile, mais les segments de coupe (34) en revanche seulement une fois.

8. Dispositif selon la revendication 1, **caractérisé en ce que** l'angle (α) est réglable en particulier peut être adapté à la particularité des matériaux des supports d'impression (1) en forme de feuille disposés en pile.

9. Dispositif selon la revendication 1, **caractérisé en ce que** par la rotation de la tête d'outil (20), il est généré de manière ciblée une dépression qui aspire l'article de papier et de poussière issu du traitement.

10. Dispositif selon la revendication 1, **caractérisé en ce qu'**au moins l'un des éléments de traitement (32) présente également sur la face détournée des supports d'impression (1) en forme de feuille disposés en feuille, de la bague de coupe (30) au moins un élément d'encoche (36').
